# EUROPÄISCHE PATENTANMELDUNG

(11) **EP 2 997 829 A1**
(43) Veröffentlichungstag der Anmeldung: **23.03.2016**
(21) Anmeldenummer: 14185671.6
(22) Anmeldetag: 19.09.2014
(51) Int. Cl.: A23G 3/50, A23G 3/54, A23G 3/56, A23G 9/24, A23G 9/26, A23G 9/44, A23G 9/48, A23G 9/50

(54) **Süßwarenprodukt mit einem inneren Körper und einer äußeren Hülle**

(71) Anmelder: Herrmann, Johannes, 93483 Pösing (DE)
(72) Erfinder: Herrmann, Johannes, 93483 Pösing (DE)
(74) Vertreter: Hannke, Christian

(57) **Zusammenfassung**

Sü βwarenprodukt (1) mit wenigstens einem inneren Körper (2) aufweisend wenigstens eine Süßware und mit einer äußeren Hülle (4), welche wenigstens teilweise den inneren Körper (2) umgibt, welche an den inneren Körper (2) an wenigstens einem Bereich anliegt und welche wenigstens eine weitere Süßware aufweist. Erfindungsgemäß weist die äußere Hülle (4) wenigstens einen ersten Oberflächenbereich (42) und wenigstens einen zweiten Oberflächenbereich (44) aufweist, wobei der erste Oberflächenbereich (42) eine geringere Dicke als der zweite Oberflächenbereich (44) aufweist.

## Beschreibung

Die vorliegende Erfindung betrifft ein Süßwarenprodukt, insbesondere ein Speiseeisprodukt, mit wenigstens einem inneren Körper aufweisend wenigstens eine Süßware und mit einer äußeren Hülle, welche wenigstens teilweise den inneren Körper umgibt, welche an den inneren Körper an wenigstens einem Bereich anliegt und welcher wenigstens eine weitere Süßware aufweist.

Aus dem Stand der Technik sind Speiseeisprodukte bekannt, welche sowohl einen inneren Körper, meist einen Kern aus Speiseeis, als auch eine äußere Hülle aufweisen, welche durch eine Ummantelung des inneren Körpers beispielsweise durch Schokolade gegeben sein kann. Oftmals liegt für viele Konsumenten gerade in der Kombination der beiden, dem inneren Speiseeis und der äußeren Hülle, beispielsweise einer äußeren Schokoladenhülle, ein besonderer geschmacklicher Genuss. Es ist außerdem bekannt, dass derartige Produkte unter anderem in Form eines Stieleises und eines Sandwicheises angeboten werden.

Aufgrund der unterschiedlichen Beschaffenheit des inneren Körpers und der äußeren Hülle weisen diese beiden Komponenten meist eine unterschiedliche Konsistenz, insbesondere eine unterschiedliche Härte und damit eine andersgeartete Bruchfestigkeit auf. Dadurch können sich während des Verzehrs eines Speiseeisprodukts beim Durchbrechen einer äußeren Schokoladenhülle an unbeabsichtigten Bereichen der äußeren Hülle ein oder mehrere Teile dieser Hülle von dem inneren Körper ablösen und hinabfallen. Dies wird aus Sicht der betroffenen Konsumenten aus vielerlei Hinsicht oftmals als nachteilig empfunden. So ist zum einen der Konsument nicht vor Verunreinigungen durch das hinabfallende Teil der äußeren Hülle gefeit und zum anderen wird möglicherweise beim Verzehr eines alleinigen Stücks des inneren Körpers das fehlende zugehörige Teil der äußeren Hülle hinsichtlich des Geschmackserlebnisses vermisst.

Aus der DE 100 43 563 A1 ist ein Tropfschutz für Nahrungsmittel und insbesondere für Speiseeis bekannt, der manschettenartig über den Umfang des Speiseeises bzw. dessen Stieles angeordnet werden kann und derart ausgestaltet ist, dass sein äußerer, horizontaler Umfang den des Speiseeises überragt und seine Oberseite eine Tropfenauffangfläche bildet. Diese Vorrichtung mag zwar den Konsumenten vor den Unannehmlichkeiten einer Verunreinigung bewahren und damit einer Schadensbegrenzung dienen, bietet aber keine Behebung der zugrundeliegenden Ursache.

Der vorliegenden Erfindung liegt daher die Aufgabe zugrunde, ein Süßwarenprodukt mit einem inneren Körper und einer äußere Hülle, die den inneren Körper wenigstens teilweise umgibt, präsentieren zu können, welches dem Konsumenten einen Verzehr des Süßwarenprodukts derart erlaubt, dass ein unbeabsichtigte Ablösen von Teilen der äußeren Hülle weitestgehend ausbleibt oder zumindest im Vergleich zum Stand der Technik wesentlich reduziert wird.

Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Ein erfindungsgemäßes Süßwarenprodukt weist wenigstens einen inneren Körper aufweisend wenigstens eine Süßware und eine äußere Hülle auf, welche wenigstens teilweise den inneren Körper umgibt, welche an dem inneren Körper an wenigstens einem Bereich anliegt und welche wenigstens eine weitere Süßware aufweist.

Erfindungsgemäß weist die äußere Hülle wenigstens einen ersten Oberflächenbereich und wenigstens einen zweiten Oberflächenbereich auf, wobei der erste Oberflächenbereich eine geringere Dicke als der zweite Oberflächenbereich aufweist. Bevorzugt weist die äußere Hülle wenigstens zwei erste Oberflächenbereiche und besonders bevorzugt eine Vielzahl von ersten Oberflächenbereichen auf. Bei einer weiteren bevorzugten Ausführungsform weist die äußere Hülle wenigstens zwei zweite Oberflächenbereiche und besonders bevorzugt eine Vielzahl von zweiten Oberflächenbereichen auf. Vorteilhaft sind wenigstens zwei erste Oberflächenbereiche wenigstens abschnittsweise durch einen zweiten Oberflächenbereich voneinander abgegrenzt. Bevorzugt sind wenigstens zwei zweite Oberflächenbereiche durch einen ersten Oberflächenbereich abgegrenzt.

Bevorzugt ist ein Anteil der ersten Oberflächenbereiche an der gesamten Oberfläche der Hülle geringer als ein Anteil der zweiten Oberflächenbereiche. Bevorzugt liegt ein Flächenverhältnis zwischen den ersten Oberflächenbereichen und den zweiten Oberflächenbereichen zwischen 1:100 und 1:1, bevorzugt zwischen 1:50 und 1:1, bevorzugt zwischen 1:30 und 1:1, bevorzugt zwischen 1: 20 und 1:2, bevorzugt zwischen 1:20 und 1:5.

Als Oberflächenbereich der äußeren Hülle wird hierbei ein (gedachtes) Teil(-stück) der äußeren Hülle bezeichnet. Die äußere Hülle bzw. ein Oberflächenbereich der dieser äußeren Hülle weist dabei sowohl eine dem inneren Körper zugewandte Seite, eine sogenannte innere Seite, auf als auch eine dem inneren Körper abgewandte Seite, eine sogenannte äußere Seite, auf.

Dabei ist unter einer Dicke eines Oberflächenbereichs der äußeren Hülle an einem Punkt der äußeren Hülle der (minimale) Abstand der äußeren Hülle zwischen einer inneren Seite der äußeren Hülle und der äußeren Seite der äußeren Hülle zu verstehen. Die Dicke eines Oberflächenbereichs kann nun über diesen Oberflächenbereich hinweg variieren, oder aber bevorzugt konstant sein. Dabei wird unter einer konstanten Dicke eines Oberflächenbereichs verstanden, dass innerhalb dieses Bereichs die Dicke im Wesentlichen gleich ist, das heißt, dass sie innerhalb eines kleinen, herstellungsbedingten Toleranzbereichs gleich ist. Weist ein erster Oberflächenbereich eine geringere Dicke als ein zweiter Oberflächenbereich auf, so ist die Dicke an jeder Stelle des ersten Oberflächenbereichs jeweils geringer als die Dicke an jeder Stelle des zweiten Oberflächenbereichs.

Bevorzugt umgibt die äußere Hülle einen inneren Körper des Süßwarenproduktes, besonders bevorzugt alle inneren Körper des Süßwarenproduktes, vollumfänglich. Vorteilhaft liegt die äußere Hülle vollumfänglich an einem inneren Körper an.

Bevorzugt weist die äußere Hülle eine andere Süßware auf als der innere Körper, welcher wenigstens teilweise und bevorzugt vollumfänglich an wenigstens einem Bereich der äußeren Hülle anliegt. Besonders bevorzugt unterscheidet sich die Konsistenz der äußeren Hülle von der des daran anliegenden inneren Körpers. Dabei kann wenigstens ein innerer Körper (insbesondere bei einer vorgegebenen Temperatur, welche beispielsweise zwischen -5°C und 20°C liegen kann) weicher sein als die äußere Hülle. Bevorzugt ist ein Schmelzpunkt des inneren Körpers niedriger als ein Schmelzpunkt der Hülle.

Vorteilhaft liegt die wenigstens eine Süßware, die der innere Körper aufweist, in festem oder pastenartigem Zustand vor. Bevorzugt handelt es sich bei dem Süßwarenprodukt um ein Speiseeisprodukt.

Vorteilhaft trägt lediglich die (räumliche) Ausgestaltung der äußeren Seitenfläche der äußeren Hülle dazu bei, dass die äußere Hülle in wenigstens einen ersten und einen zweiten Oberflächenbereich unterteilt werden kann, die sich hinsichtlich ihrer Dicke unterscheiden. Das heißt, dass die Oberfläche des wenigstens einen inneren Körpers, an dem die äußere Hülle anliegt, und auch die innere Seitenfläche des äußeren Körpers im Wesentlichen glatt und bevorzugt lokal bzw. abschnittsweise eben ausgebildet sein kann und die äußere Seitenfläche des äußeren Körpers beispielsweise stufenförmig oder pyramidenförmig ausgestaltet ist. Daneben wäre es denkbar, dass die Strukturen durch kugelförmige Körper bei der Formgebung hervorgerufen werden.

Es kann aber auch die äußere Seitenfläche der äußeren Hülle im Wesentlichen glatt sein und bevorzugt lokal bzw. abschnittsweise eben sein und dennoch kann die äußere Hülle wenigstens einen ersten und wenigstens einen zweiten Oberflächenbereich aufweisen, die eine unterschiedliche Dicke aufweisen. Bevorzugt kann somit hauptsächlich lediglich die Ausgestaltung der inneren Seitenfläche der äußeren Hülle für eine unterschiedliche Dicke der äußeren Hülle primär verantwortlich sein.

Denkbar sind aber auch Kombinationen der beiden eben vorgestellten Ausgestaltungen. Bei einer bevorzugten Ausführungsform fungiert wenigstens ein Oberflächenbereich der äußeren Hülle als Sollbruchstelle. Bevorzugt dient wenigstens ein Oberflächenbereich der äußeren Hülle während des Verzehrs des Süßwarenprodukts als Sollbruchstelle. Eine derartige Ausgestaltung der äußeren Hülle bewirkt, dass das Süßwarenprodukt ohne Zuhilfenahme weiterer Hilfsmittel und insbesondere auch ohne vorheriges manuelles Auseinanderbrechen verzehrt werden kann und dabei ein sauberes Ablösen eines Teils der äußeren Hülle ermöglicht wird. Bei einer weiteren vorteilhaften Ausführungsform ist es denkbar, dass die Oberfläche mit einer vorgegebenen, beispielsweise netzartigen Struktur an Sollbruchstellen ausgebildet ist.

Vorteilhaft dient ein erster Oberflächenbereich der äußeren Hülle, bevorzugt dienen alle ersten Oberflächenbereiche als Sollbruchstelle. Es kann jedoch auch ein zweiter Oberflächenbereich oder es können auch alle zweiten Oberflächenbereiche als Sollbruchstelle dienen. Insbesondere wird die Wirkung einer Sollbruchstelle durch eine Kombination aus wenigstens einem ersten und wenigstens einem zweiten Oberflächenbereich, bevorzugt durch einen ersten und zwei zweite Oberflächenbereiche hervorgerufen, wobei besonders bevorzugt der erste Oberflächenbereich zwischen den beiden zweiten Oberflächenbereichen angeordnet ist.

Vorteilhaft dient wenigstens ein Oberflächenbereich der äußeren Hülle als Sollbruchstelle der äußeren Hülle, also ausschließlich als Sollbruchstelle für die äußere Hülle, beispielsweise als Sollbruchstelle zur Abtrennung eines Teils der äußeren Hülle. Damit ist gemeint, dass besagte Sollbruchstellen bevorzugt nicht oder nicht notwendigerweise auch als geplante Bruchstelle für den inneren Körper dienen. Besonders bevorzugt dienen alle Sollbruchstellen lediglich als Sollbruchstellen für die äußere Hülle.

Bei einer Vielzahl von Süßwarenprodukten hat sich nämlich herausgestellt, dass es für einen konsumentenfreundlichen Verzehr nicht notwendigerweise erforderlich ist, eine gemeinsame Sollbruchstelle für einen Teil des inneren Körpers und den anliegenden Teil der äußeren Hülle vorzusehen, so dass sowohl die äußere Hülle als auch der innere Körper des Süßwarenprodukts entlang einer geplanten Bruchstelle brechen. So hat sich gezeigt, dass bei diesen Produkten ein Durchtrennen des inneren Körpers hinsichtlich entstehender ungewünschter Bruchstücke des inneren Körpers unproblematisch ist, so dass es ausreichend ist, lediglich die äußere Hülle mit Sollbruchstellen auszustatten.

Dabei sei besonders darauf hingewiesen, dass der innere Körper bevorzugt selbst nicht nur keine eigene Sollbruchstelle aufweist, sondern dass sich auch nicht die Wirkung wenigstens einer Sollbruchstelle der äußeren Hülle auf den inneren Körper, insbesondere auf den Bereich des inneren Körpers, der sich in der Nähe dieser Sollbruchstelle befindet, überträgt. Es hat sich nämlich gezeigt, dass es für einige Konsumenten unerwünscht ist, wenn eine Sollbruchstelle der äußeren Hülle zugleich als Sollbruchstelle für einen inneren Körper wirkt. Denkbar ist außerdem, dass eine Sollbruchstellen in der äußeren Hülle nicht über eine Oberflächenbereiche mit unterschiedlicher Dicke verglichen mit wenigstens einer anderen Oberfläche erzielt werden, sondern durch eine geeignete Wahl verschiedener Süßwaren bzw. Zusammensetzungen aus diesen innerhalb eines Oberflächenbereichs.

Dabei kann besagte Wirkung eines Oberflächenbereichs der äußeren Hülle als Sollbruchstelle auch erst durch seine Anordnung an einen anderen Oberflächenbereich oder an mehrere andere Oberflächenbereiche entfaltet werden. Denkbar wäre hierzu etwa die Wirkung einer Kante als Sollbruchstelle, wobei die Kante aus der Anordnung benachbarter Oberflächenbereiche unterschiedlicher Dicke resultiert.

Bevorzugt bildet die äußere Seite der äußeren Hülle eine den Sollbruchstellen entsprechende Gestalt aus. Damit korreliert lediglich die (räumliche) Ausgestaltung der äußeren Seitenfläche der äußeren Hülle mit der Position und der Ausgestaltung der Sollbruchstelle. Die Ausgestaltung der inneren Seitenfläche der äußeren Hülle und die Ausgestaltung der Oberfläche des inneren Körpers korrelieren dabei nicht notwendig mit der Position und der Ausgestaltung einer Sollbruchstelle oder bevorzugt aller Sollbruchstellen.

Bevorzugt liegen der innere Körper und die äußere Hülle flächig aneinander an. Bevorzugt liegen der innere Körper und die äußere Hülle entlang einer im Wesentlichen kantenfreien Fläche aneinander an. Es wäre jedoch auch denkbar, dass eine Berührungsfläche zwischen dem inneren Körper und der äußeren Hülle mit Kanten ausgebildet ist, wobei durch diese Kanten auch die Dickenunterschiede zwischen den ersten und zweiten Oberflächenbereichen der Hülle ausbilden.

Besonders bevorzugt weist die Oberfläche dieses inneren Körpers eine Oberflächenstruktur dergestalt auf, dass diese Oberfläche des inneren Körpers bereits zumindest teilweise eine Negativform für wenigstens eine Sollbruchstelle der äußeren Hülle darstellt. Vorteilhaft werden alle Sollbruchstellen der äußeren Hülle durch eine Negativform der Oberfläche des inneren Körpers gebildet. Bevorzugt korreliert die Position der Sollbruchstellen der äußeren Hülle mit der Ausgestaltung der Oberfläche eines daran anliegenden Bereichs des inneren Körpers. Dies bietet den Vorteil, dass die äußere Gestaltgebung des Süßwarenprodukts nicht von funktionellen Eigenschaften der äußeren Hülle, also von der spezifischen Ausgestaltung der Sollbruchstellen, abhängt, sondern hauptsächlich entsprechend einem wunschgemäßen Design erfolgen kann.

Es sind aber auch Kombinationen der vorgenannten beiden Ausgestaltungen möglich. So wäre es denkbar, dass die spezifische Ausgestaltung sowohl der inneren Seite als auch der äußeren Seite der äußeren Hülle zum Entstehen einer Sollbruchstelle, beispielsweise durch einen resultierenden Dickenunterschied der äußeren Hülle, beitragen.

Bei einer weiteren bevorzugten Ausführungsform sind die Sollbruchstellen derart ausgestaltet, dass sie das Süßwarenprodukt in mundgerechte Portionen aufteilen. Dabei können die Abmessungen einer mundgerechten Portion sowohl an Kinder als auch an Erwachsene oder aber auch an beide angepasst sein.

Bei einer weiteren vorteilhaften Ausführungsform weist die äußere Hülle wenigstens einen dritten Oberflächenbereich auf, der sich hinsichtlich seiner Dicke von den ersten beiden Oberflächenbereichen unterscheidet.

Bei einer weiteren vorteilhaften Ausführungsform weist die äußere Hülle eine Vielzahl erster Oberflächenbereiche und eine Vielzahl zweiter Oberflächenbereiche auf, wobei diese derart angeordnet sind, dass ein sich ergebender Dickenverlauf der äußeren Hülle über die ersten Oberflächenbereiche und die zweiten Oberflächenbereiche wenigstens abschnittsweise periodisch ist. Bevorzugt ist der Dickenverlauf entlang einer Umfangsrichtung des Süßwarenprodukts periodisch. Zudem ist denkbar, dass der Dickenverlauf auf einer Seite eines Süßwarenprodukts periodisch ist.

Bei einer weiteren vorteilhaften Ausführungsform ist ein erster Oberflächenbereich zwischen zwei zweiten Oberflächenbereichen angeordnet und ein Dickenverlauf der äußeren Hülle an mindestens einem Übergang zwischen diesen Oberflächenbereichen folgt einem im Wesentlichen V- oder U-förmigen Verlauf.

Denkbar ist auch, dass erste und zweite Oberflächenbereiche derart ausgestaltet und angeordnet sind, dass die äußere Hülle von Rillen oder Kerben und bevorzugt netzartig von Rillen oder Kerben überzogen ist. Zudem können sich erste Oberflächenbereiche entlang Geodäten zwischen zwei Punkten der Oberfläche der äußeren Hülle erstrecken. Bevorzugt dienen dünnere Oberflächenbereich der Hülle als Sollbruchstellen. Bevorzugt ist jedoch die Hülle aus einem einheitlichen Material hergestellt.

Bevorzugt erstrecken sich die ersten Oberflächenbereiche entlang von Linien und besonders bevorzugt entlang von Linien, die wenigstens abschnittsweise geradlinig ausgeführt sind. Daneben können diese Linien auch abschnittsweise gekrümmt sein. Auch wäre es möglich, dass diese Linien in mehreren bezüglich einander abgewinkelten Abschnitten ausgebildet sind. Bevorzugt sind die zweiten Oberflächenbereiche flächig ausgebildet, d.h. sie erstrecken sich in wenigstens zwei zueinander senkrecht stehende Richtungen. Dabei ist es möglich, dass zwei derartige flächige zweite Oberflächenbereiche durch einen ersten (insbesondere sich entlang einer Linie erstreckenden) ersten Oberflächenbereich voneinander getrennt sind.

Bei einer weiteren vorteilhaften Ausführungsform handelt es sich bei der äußeren Hülle um eine perforierte Oberfläche. Bevorzugt sind in wenigstens einem Oberflächenbereich der äußeren Hülle Perforationen vorgesehen. Bevorzugt sind alle in der äußeren Hülle vorgesehenen Sollbruchstellen durch Perforationen umgesetzt.

Die Perforationen können dabei durch eine Vielzahl kleiner Löcher der äußeren Hülle gebildet sein. Diese können eine runde oder längliche Gestalt aufweisen.

Bei einer weiteren vorteilhaften Ausführungsform enthält wenigstens ein innerer Körper und bevorzugt enthalten alle inneren Körper Speiseeis. Besonders bevorzugt besteht wenigstens ein innerer Körper und insbesondere bestehen alle inneren Körper aus Speiseeis.

Bei einer weiteren vorteilhaften Ausführungsform weist die äußere Hülle wenigstens eine Zutat auf, ausgewählt aus einer Gruppe von Lebensmitteln, die Schokolade, Joghurt und Zuckercreme enthält.

Bei einer weiteren vorteilhaften Ausführungsform ist die Oberfläche wenigstens eines Oberflächenbereiches zusätzlich durch Ausbuchtungen geprägt, welche durch Lebensmittelstücke verursacht sind. Diese Lebensmittelstücke können beispielsweise durch Mandelstücke oder Stücke von Nüssen gegeben sein.

Bei einer weiteren vorteilhaften Ausführungsform enthält das Süßwarenprodukt einen Stiel. Dieser kann etwa aus Holz, Kunststoff, einer weiteren Süßware oder auch aus Kombinationen hieraus bestehen. Bevorzugt durchdringt dieser Stil auch einen Oberflächenabschnitt der Hülle, bevorzugt weist die Hülle in einem Abschnitt, der den Stil umgibt, eine zumindest abschnittsweise einheitliche Dicke auf. Bevorzugt sind in dem demjenigen Bereich der Hülle, welcher von dem Stil durchdringen ist, keine Sollbruchstellen vorgesehen. Hierdurch wird verhindert, dass durch die Kräfte, welche beim Halten etwa eines Speiseeises ungewollt Brüche in der Hülle entstehen.

Bei einer weiteren vorteilhaften Ausführungsform ist die Dicke der äußeren Hülle geringer als die Dicke des inneren Körpers. Dabei bezieht sich diese Dicke des inneren Körpers auf eine Abmessung des inneren Körpers, bevorzugt auf eine maximale Dicke, in einem zentralen Bereich (und nicht einem Randbereich) des inneren Körpers. Bei einer weiteren bevorzugten Ausführungsform ist jedoch auch eine maximale Dicke der äußeren Hülle geringer als die Dicke des inneren Körpers.

Bei einer weiteren vorteilhaften Ausführungsform ist die maximale Dicke der äußeren Hülle kleiner als 0.8 cm, bevorzugt kleiner als 0.5 cm und besonders bevorzugt kleiner als 0.1 cm und die minimale Dicke der äußeren Hülle größer als 0.1 mm, bevorzugt größer als 0.5 mm, bevorzugt größer als 1 mm und besonders bevorzugt größer als 1.5 mm.

Bei einer weiteren vorteilhaften Ausführungsform beträgt der prozentuale Anteil der minimalen Dicke an der maximalen Dicke der äußeren Hülle weniger als 80 %, bevorzugt weniger als 75 % und besonders bevorzugt weniger als 50 %.

Die vorliegende Erfindung ist weiterhin auf ein Verfahren zur Herstellung eines Süßwarenprodukts und insbesondere eines Speiseisprodukts gerichtet. Dabei wird in einem ersten Verfahrensschritt ein innerer Körper des Speiseeisprodukts hergestellt, der bevorzugt auch eine Negativform für die Hülle bildet. Dabei ist es möglich, dass zunächst vorgegebene Zutaten für eine den inneren Körper bildende Grundmasse zusammengemischt werden. Bevorzugt sind diese Zutaten aus einer Gruppe von Zutaten ausgewählt, welche Milch, Zucker, Fett, Wasser, Zucker und/oder Fruchtsäfte enthält. Dieser als Negativform ausgebildete Grundkörper kann stufenförmige und/oder pyramidenförmige und/oder kuegelförmige Oberflächenabschnitte aufweisen, um so entsprechend die Struktur der Hülle auszubilden.

Bevorzugt wird daher die Struktur der Sollbruchstellen bzw. der Hülle durch eine entsprechende Oberflächenstruktur des Grundkörpers ausgebildet.

Weiterhin wird dieser innere Körper auf eine vorgegebene Temperatur abgekühlt. Weiterhin wird an dem inneren Körper eine äußere Hülle aus einer essbaren Substanz angebracht. Erfindungsgemäß wird diese Hülle dergestalt angebracht, dass die an dem inneren Körper angebrachte äußere Hülle wenigstens einen ersten Oberflächenbereich und wenigstens einen zweiten Oberflächenbereich aufweist, wobei der erste Oberflächenbereich eine geringere Dicke als der zweite Oberflächenbereich aufweist.

So ist es beispielsweise möglich, dass die äußere Hülle an dem inneren Körper angebracht wird und anschließend der mit der äußeren Hülle versehene innere Körper in eine Form eingebracht wird, welche die entsprechenden unterschiedlichen Dicken der äußeren Hülle erzeugt. Es wäre jedoch auch denkbar, dass bereits der innere Körper derartige Strukturen aufweist, welche die Oberflächenbereiche mit den unterschiedlichen Dicken erzeugen. In diesem Fall erzeugt die Form diese Dickenunterschiede in Zusammenwirken mit der Oberflächenstruktur des inneren Körpers. Weiterhin wäre es auch denkbar, dass der innere Körper mittels einer Form erzeugt wird, in welche die den inneren Körper bildende Mischung eingebracht wird.

Bei einem weiteren vorteilhaften Verfahren wird die oben beschriebene Mischung, welche den inneren Körper bildet, zunächst erwärmt und anschließend abgekühlt. So kann die Mischung etwa auf 80 °C erhitzt und (insbesondere innerhalb einer kurzen Zeit etwa innerhalb einer Minute) wieder abgekühlt werden, z.B. auf eine Temperatur von ca. 4°C. Anschließend ruht bevorzugt die Mischung für eine vorgegebene Zeit und besonders bevorzugt mindestens sechs Stunden (insbesondere in Lagertanks). Danach wird die Mischung bevorzugt weiter gekühlt, beispielsweise auf eine Temperatur, welche zwischen -5 und -15°C. liegt. Bevorzugt wird während dieser Zeit die Eismasse durch (insbesondere ständige) Rührbewegung am Rand immer wieder abgeschabt.

Bevorzugt weist die Form, in welche der bereits mit der äußeren Hülle versehene innere Körper eingelegt wird, Strukturen auf, welche in der äußeren Hülle Sollbruchstellen erzeugen, wie beispielsweise nach innen, d.h. auf die Hülle zuweisende Vorsprünge.

Besonders bevorzugt wird durch das hier beschriebene Verfahren ein Speiseeis der oben beschriebenen Art hergestellt.

Weitere Vorteile und Ausführungsformen ergeben sich aus den beigefügten Zeichnungen. Darin zeigen:
- Fig. 1: Eine Querschnittsdarstellung eines Süßwarenprodukts gemäß dem Stand der Technik;
- Fig. 2a: eine Querschnittsdarstellung eines Bereichs einer Ausführungsform eines erfindungsgemäßen Süßwarenprodukts;
- Fig. 2b: eine Querschnittsdarstellung eines Bereichs einer weiteren Ausführungsform eines erfindungsgemäßen Süßwarenprodukts; und
- Fig. 2c: eine Querschnittsdarstellung eines Bereichs einer Ausführungsform eines erfindungsgemäßen Süßwarenprodukts.

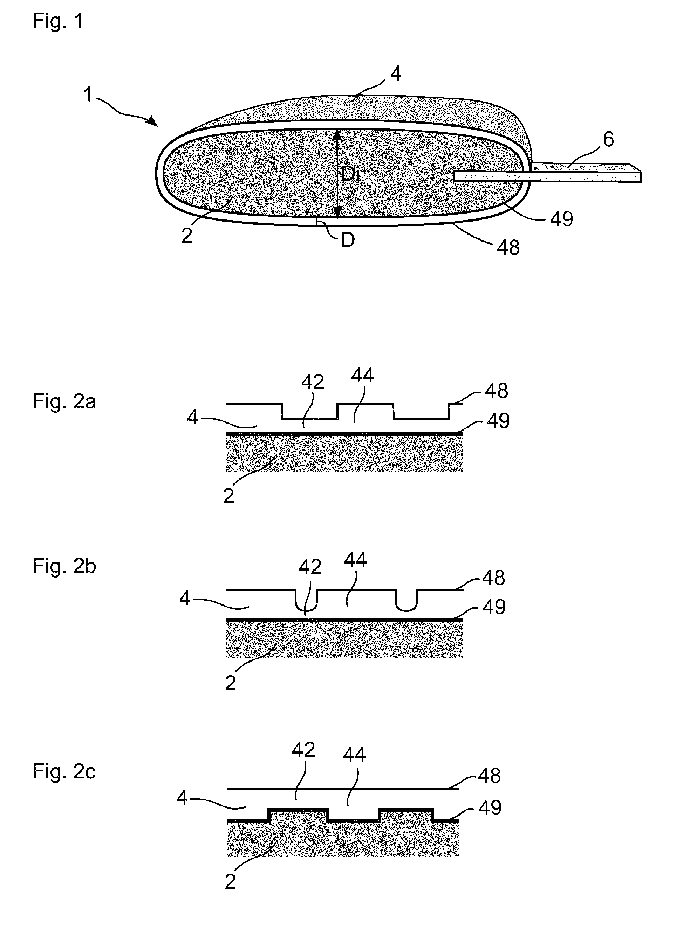

Fig. 1 zeigt eine schematische Querschnittsdarstellung eines Süßwarenprodukts 1 gemäß dem Stand der Technik. Dabei weist das Süßwarenprodukt 1 einen inneren Körper 2 und eine äußere Hülle 4 auf. In der gezeigten Ausführungsform umgibt die äußere Hülle 4 den inneren Körper 2 vollumfänglich und liegt auch vollumfänglich an dem inneren Körper 2 an, ausgenommen jeweils einer Stelle, in der ein Stiel 6 teilweise in dem inneren Körper 2 angeordnet ist und sich durch die äußere Hülle 4 hindurch nach außen erstreckt.

Die äußere Hülle 4 ist insofern entsprechend einem typischen Beispiel gemäß dem Stand der Technik ausgestaltet, als die Dicke D der äußeren Hülle 4 hier über die gesamte äußere Hülle 4 hinweg im Wesentlichen konstant ist. Dabei ist die Dicke D an einer Stelle der äußeren Hülle 4 gegeben durch den kürzesten Abstand an dieser Stelle von der inneren Seite 49 der äußeren Hülle 4, welche die dem inneren Körper 2 zugewandte Seite der äußeren Hülle 4 ist, zu der äußeren Seite 48, welche die dem inneren Körper abgewandte Seite der äußeren Hülle 4 ist.

Als im Wesentlichen konstant wird auch verstanden, wenn die Dicke D der äußeren Hülle 4 innerhalb eines herstellungsbedingten Toleranzbereichs schwankt. Von der Betrachtung ausgenommen werden sollen definierte Bereiche, bei denen es herstellungsbedingt schwierig bzw. nur unter erheblichem Mehraufwand zu verwirklichen ist, eine gleiche Dicke der äußeren Hülle 4 wie in dem umliegenden Bereich der äußeren Hülle 4 zu ermöglichen. Als Beispiel sei hierfür der Bereich der äußeren Hülle 4 genannt, in dem ein Stiel 6 die äußere Hülle 4 durchdringt und bei dem oftmals die Dicke der äußeren Hülle deutlich von der des umliegenden Bereichs (ungewünscht) abweichen kann.

Außerdem ist in dem dargestellten Ausführungsbeispiel der Figur 1 ein Süßwarenprodukt 1 gezeigt, welches eine kleinere Dicke D der äußeren Hülle 4 verglichen mit der Dicke Di des inneren Körpers 2 aufweist.

Die Figuren 2a - 2c sind Querschnittsdarstellungen eines Bereichs eines erfindungsgemäßen Süßwarenprodukts in jeweils verschiedenen Ausführungsformen. Die Figuren zeigen jeweils einen Ausschnitt der äußeren Hülle 4 mit ihrer äußeren Seite 48 und ihrer inneren Seite 49 sowie einen Ausschnitt eines inneren Körpers 2. Der innere Körper 2 liegt hierbei an der äußeren Hülle 4, genauer an der inneren Seite 49 der äußeren Hülle 4, an.

Dargestellt wird außerdem in den Figuren 2a - 2c eine erfindungsgemäße Ausgestaltung der äußeren Hülle 4, die jeweils (mehrere) erste Oberflächenbereiche 42 sowie (mehrere) zweite Oberflächenbereiche 44 aufweisen, wobei die ersten Oberflächenbereiche 42 eine geringere Dicke als die zweiten Oberflächenbereiche 44 aufweisen.

Der Dickenverlauf der äußeren Hülle 4 an einem Übergang zwischen Oberflächenbereichen, welche in der Reihenfolge zweiter Oberflächenbereich, erster Oberflächenbereich und zweiter Oberflächenbereich nebeneinander angeordnet sind, kann einem im Wesentlichen stufenförmigen Verlauf, wie in Fig. 2a dargestellt, oder auch einem im Wesentlichen U-förmigen Verlauf folgen, wie in Fig. 2b dargestellt.

Zudem weisen die Figuren 2a und 2b im Vergleich zur Figur 2c einen grundlegenden Unterschied hinsichtlich der Umsetzung Oberflächenbereiche unterschiedlicher Dicke auf. Während in den Figuren 2a und 2b eine im Wesentlichen (zumindest abschnittsweise) ebene und glatte Oberfläche des inneren Körpers (und damit auch ebene und glatte innere Seitenfläche 49 der äußeren Hülle) aufweist, zeigt die in Figur 2c dargestellte Oberfläche des inneren Körpers (und damit auch die innere Seitenfläche 49 der äußeren Hülle) eine spezifische stufenförmige Struktur. In den Figuren 2a und 2b ist jeweils die äußere Seitenfläche 48 der äußeren Hülle 4 derart ausgestaltet, dass sich erste und zweite Oberflächenbereiche mit unterschiedlichen Dicken (42, 44) ergeben. Dagegen ist in der Figur 2c die äußere Seitenfläche 48 der äußeren Hülle 4 im Wesentlichen (zumindest abschnittsweise) eben und glatt dargestellt. Somit werden in dieser Ausführungsform die Oberflächenbereiche unterschiedlicher Dicke (42, 44) durch die Ausgestaltung der Oberfläche des inneren Körpers 2 bzw. der inneren Seitenfläche 49 der äußeren Hülle 4 hervorgerufen.

Diese beiden in den Fig. 2a und 2b gezeigten Ausgestaltungen können auch miteinander kombiniert werden. So wäre es möglich, dass abschnittsweise der innere Körper eine Struktur aufweist welche zu der Dickenschwankung der Hülle führt und abschnittsweise die äußere Oberfläche eine derartige Struktur aufweist. Auch wäre es möglich, dass sich die Dickenschwankungen der Hülle in gleichen Abschnitten der Hülle sowohl durch eine Struktur des inneren Körpers als auch durch eine Struktur der Hülle ergeben.

Im Falle, dass Sollbruchstellen mittels einer speziellen Anordnung bzw. der jeweiligen Ausgestaltung dünnerer oder dickerer Oberflächenbereiche (42, 44) umgesetzt werden, korreliert damit in der Figur 2c (im Gegensatz zu den Figuren 2a und 2b) die Position und die Ausgestaltung der Sollbruchstellen mit der Struktur bzw. der (räumlichen) Ausgestaltung der Oberfläche des inneren Körpers 2. Damit bildet die Oberfläche des inneren Körpers sozusagen die Negativform für die Sollbruchstellen in der äußeren Hülle.

Der Anmelder behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Süßwarenprodukt
- 2: innerer Körper
- 4: äußere Hülle
- 6: Stiel
- 42: erster Oberflächenbereich
- 44: zweiter Oberflächenbereich
- 46: dritter Oberflächenbereich
- 48: äußere Seite der äußeren Hülle
- 49: innere Seite der äußeren Hülle
- D: Dicke
- Di: Dicke des inneren Körpers

## Patentansprüche

1. Süßwarenprodukt (1) mit wenigstens einem inneren Körper (2) aufweisend wenigstens eine Süßware und mit einer äußeren Hülle (4), welche wenigstens teilweise den inneren Körper (2) umgibt, welche an den inneren Körper (2) an wenigstens einem Bereich anliegt und welche wenigstens eine weitere Süßware aufweist,
**dadurch gekennzeichnet, dass**
die äußere Hülle (4) wenigstens einen ersten Oberflächenbereich (42) und wenigstens einen zweiten Oberflächenbereich (44) aufweist, wobei der erste Oberflächenbereich (42) eine geringere Dicke als der zweite Oberflächenbereich (44) aufweist.

2. Süßwarenprodukt (1) nach Anspruch 1,
**dadurch gekennzeichnet, dass**
wenigstens ein Oberflächenbereich (42, 44) der äußeren Hülle (4) als Sollbruchstelle fungiert.

3. Süßwarenprodukt (1) nach Anspruch 2,
**dadurch gekennzeichnet, dass**
die Sollbruchstelle ausschließlich als Sollbruchstelle für die äußere Hülle dient.

4. Süßwarenprodukt (1) nach wenigstens einem der vorhergehenden Ansprüche,
**dadurch gekennzeichnet, dass**
ein erster Oberflächenbereich (42) zwischen zwei zweiten Oberflächenbereichen (44) angeordnet ist und ein Dickenverlauf der äußeren Hülle (4) an mindestens einem Übergang zwischen diesen Oberflächenbereichen einem im Wesentlichen V- oder U-förmigen Verlauf folgt.

5. Süßwarenprodukt (1) nach wenigstens einem der vorhergehenden Ansprüche,
**dadurch gekennzeichnet, dass**
es sich bei der äußeren Hülle (4) um eine perforierte Oberfläche handelt.

6. Süßwarenprodukt (1) nach wenigstens einem der vorhergehenden Ansprüche,
**dadurch gekennzeichnet, dass**
der innere Körper (2) Speiseeis enthält und/oder die äußere Hülle (4) wenigstens eine Zutat aufweist, die aus einer Gruppe von Lebensmitteln ausgewählt ist, die Schokolade, Joghurt und Zuckercreme enthält.

7. Süßwarenprodukt (1) nach wenigstens einem der vorhergehenden Ansprüche,
**dadurch gekennzeichnet, dass**
es einen Stiel (6) enthält.

8. Süßwarenprodukt (1) nach wenigstens einem der vorhergehenden Ansprüche,
**dadurch gekennzeichnet, dass**
die maximale Dicke der äußeren Hülle (4) kleiner ist als 0.8 cm, bevorzugt kleiner als 0.5 cm und besonders bevorzugt kleiner als 0.1 cm und/oder die minimale Dicke der äußeren Hülle (4) größer als 0.1 mm, bevorzugt größer als 0.5 mm, bevorzugt größer als 1 mm und besonders bevorzugt größer als 1.5 mm.

9. Süßwarenprodukt (1) nach wenigstens einem der vorhergehenden Ansprüche,
**dadurch gekennzeichnet, dass**
der prozentuale Anteil der minimalen Dicke an der maximalen Dicke der äußeren Hülle (4) weniger als 80 %, bevorzugt weniger als 75 % und besonders bevorzugt weniger als 50 % beträgt.

10. Verfahren zur Herstellung eines Süßwarenprodukts und insbesondere eines Speiseisprodukts mit den Schritten:
- Herstellung eines inneren Körpers (2) aufweisend wenigstens eine Süßware
- Abkühlen dieses inneren Körpers (2) auf eine vorgegebene Temperatur
- Anbringen einer äußeren Hülle (4) aus einer essbaren Substanz an dem inneren Körper (2)
**dadurch gekennzeichnet, dass**
diese äußere Hülle (4) dergestalt angebracht wird, dass die an dem inneren Körper (2) angebrachte äußere Hülle (4) wenigstens einen ersten Oberflächenbereich (42) und wenigstens einen zweiten Oberflächenbereich (44) aufweist, wobei der erste Oberflächenbereich (42) eine geringere Dicke als der zweite Oberflächenbereich (44) aufweist.
